# EUROPEAN PATENT APPLICATION

(11) **EP 4 742 586 A1**
(43) Date of publication of application: **13.05.2026**
(21) Application number: 24211477.5
(22) Date of filing: 07.11.2024
(51) Int. Cl.: H04L 9/08, H04L 9/32

(54) **QUANTUM RESISTANT DIGITAL SIGNATURE CRYPTOGRAPHY**

(71) Applicant: Mastercard International Incorporated, Purchase NY 10577 (US)
(72) Inventor: BERIC, John, London, NW11 8NH (GB); COLNOT, Cédric, 1180 Uccle (BE); GARRETT, Duncan, London, N1 2EJ (GB); WARD, Michael, Taunton, TA4 2JB (GB)
(74) Representative: Gill Jennings & Every LLP

(57) **Abstract**

Computer-implemented methods and systems are provided for securing digital signatures on a computational network to protect against unauthorised access, for example, by a quantum computer or similar system.

## Description

### FIELD OF THE INVENTION

Computer-implemented methods and systems are provided for securing digital signatures on a computational network to protect against unauthorised access, for example, by a quantum computer or similar system.

### BACKGROUND

In traditional asymmetric or public-key cryptographic signatures (e.g., using RSA (Rivest-Shamir-Adleman) or ECC (Elliptic-curve cryptography), and DSA (Digital Signature Algorithm)), data items, such as a public key and a signature signed by a corresponding private key, are made available to the public (or to all of a network). The public may include malicious parties that may wish to compromise data exchange. Security of encrypted data or cryptographic signatures relies on a very high difficulty and/or very high level of computation required to solve intractable mathematical problems associated with the encryption method. Solving said intractable mathematical problems, starting from publicly available data, would be a means of gaining unauthorised access to the data which has been encrypted. Methods, which in classical computing systems suffer from the aforementioned very high difficulty and/or very high level of computation, include cryptographic attacks, such as a brute-force key search attack.

However, quantum computers threaten this security by providing a potential means for substantially increasing the feasibility of cryptographic attacks such as a brute-force key search attacks. Quantum computers may therefore be able to recover a private key of an asymmetric key pair, or the data which has been encrypted, based just on the publicly available public key, signature, or encrypted data. This may be achieved within a much shorter and more feasible time frame that is useful to a malicious party.

A number of quantum resistant algorithms have been proposed as an alternative to traditional encryption algorithms, however, these algorithms are, in the main, bloated and inefficient. Further, large quantities of network infrastructure rely on the traditional algorithms, and, as such, a full scale conversion to new quantum resistant algorithms would prove very disruptive and resource intensive.

As such, there is a need for a less resource-intensive and less disruptive means for reducing the risk posed by quantum computers to asymmetric encryption based systems, which can be straightforwardly implemented.

### SUMMARY OF INVENTION

A first aspect of the invention herein provides a computer-implemented method for securing digital signatures on a computational network, including: generating, by a first computing device, a digital signature using a private key of an asymmetric cryptographic key pair associated with the first computing device; encrypting, by the first computing device, the digital signature using a secret symmetric encryption key to produce an encrypted digital signature; and sending the encrypted digital signature, by the first computing device, to a second computing device, on a computational network; wherein a public key of the asymmetric cryptographic key pair associated with the first computing device is available at the first computing device and the second computing device, based on a secure data transfer using the secret symmetric encryption key; and wherein the secret symmetric encryption key is available at the first computing device and the second computing device, based on a secure data transfer comprising at least one of a secure data transfer means and a secure channel.

Advantageously, this aspect may provide a method for reducing the risk posed by quantum computers to asymmetric cryptography systems that may be straightforwardly retrofitted to such systems. Additionally, the method is less resource-intensive than comparable quantum resistant algorithms. In particular, the step of encrypting the digital signature using a secret symmetric encryption key to produce an encrypted digital signature may provide such a reduction of risk, since symmetric encryption is based on different principles to asymmetric encryption, wherein, unlike asymmetric encryption, the security of symmetric encryption may not be derived from the difficulty or intractability of solving certain mathematical problems solvable by a quantum computer, but rather on the infeasibility of correctly reversing a number of different operations such as substitutions and permutations.

Preferably, the network is a closed network or a partially closed network, such as a transaction network. Advantageously, the present invention may be particularly suited to closed or partially-closed networks, as it may be particularly feasible to make the secret symmetric encryption key available at the first computing device and the second computing device, for example, by means of a secure data channel or other secure data transfer means, such as physically moving a (possibly encrypted) data storage device between computing devices on the network.

In some embodiments, the encrypting the digital signature using a secret symmetric encryption key to produce an encrypted digital signature includes: extracting a selection of bytes (or digits) of the digital signature; encrypting the selection of bytes of the digital signature, using the secret symmetric encryption key, to produce an encrypted selection of the digital signature; and combining the encrypted selection of the digital signature with the digital signature to produce the encrypted digital signature. Advantageously, encrypting only a selection of the bytes of the digital signature with the secret symmetric encryption key may substantially increase the speed of encryption, while substantially maintaining the security associated with the encryption. Indeed, in some cases, it may increase security, as a malicious party with access to the secret symmetric encryption key would also need to know which bytes, and how many bytes, need to be decrypted with said key, which they may not know.

The combining the encrypted selection of the digital signature with the digital signature to produce the encrypted digital signature may include: replacing the selection of bytes of the digital signature with the encrypted selection of the digital signature. Advantageously, this embodiment may offer straightforward and quick execution of the method while maintaining substantial security.

In some embodiments, the combining the encrypted selection of the digital signature with the digital signature to produce the encrypted digital signature includes: replacing an auxiliary selection of bytes of the digital signature with the result of an XOR function of the encrypted selection of the digital signature and the auxiliary selection of bytes of the digital signature. Preferably, the selection of bytes and the auxiliary selection of bytes have the same number of bytes, and the selection of bytes and the auxiliary selection of bytes do not overlap. Advantageously, this embodiment may maximize security of the method, and offer the greatest resistance to brute-force key search attack from quantum computers.

Preferably, encryption associated with the secret symmetric encryption key is secure against cryptographic attack (e.g., brute-force key search attack) by a quantum computer. Advantageously, encryption of the secret symmetric encryption key of the present invention may be more secure against cryptographic attack by a quantum computer than the encryption by the asymmetric key pair. Therefore, security of the whole method may be enhanced.

Typically, the public key of the asymmetric cryptographic key pair associated with the first computing device being available at the first computing device and the second computing device, based on a secure data transfer using the secret symmetric encryption key, includes the steps of: generating, by the first computing device, the private key and the public key of the asymmetric cryptographic key pair associated with the first computing device; encrypting, by the first computing device, using the secret symmetric encryption key, the public key of the asymmetric cryptographic key pair associated with the first computing device, to produce an encrypted public key; and sending the encrypted public key, by the first computing device, to the second computing device, on the computational network. Advantageously, the present invention offers a means of keeping the public key known only to the first computing device and the second computing device and possibly other computing devices that may require the public key. As such the public key (e.g., the modulus and public exponent in RSA cryptography) may be unavailable to a malicious party. This may substantially increase security from attack by a quantum computer, which may be capable of ascertaining the private key based on the public key.

A second aspect of the invention herein provides a computer-implemented method for securing digital signatures on a computational network, including: receiving an encrypted digital signature, at a second computing device, from a first computing device over a computational network; decrypting, by the second computing device, the encrypted digital signature using a secret symmetric encryption key to produce a digital signature; and verifying, by the second computing device, that the digital signature was generated at the first computing device, by using a public key of an asymmetric cryptographic key pair associated with the first computing device; wherein the public key of the asymmetric cryptographic key pair associated with the first computing device is available at the first computing device and the second computing device, encrypted using the secret symmetric encryption key; and wherein the secret symmetric encryption key is available at the first computing device and the second computing device, based on a secure data transfer.

Advantages of the second aspect directed to decryption, and embodiments thereof, may be substantially the same as advantages associated with the first aspect and corresponding embodiments directed to encryption.

Preferably, the network is a closed network or a partially closed network, such as a transaction network.

In some embodiments, the decrypting the encrypted digital signature using a secret symmetric encryption key to produce a digital signature includes: extracting an encrypted selection of the digital signature; decrypting the encrypted selection of the digital signature, using the secret symmetric encryption key, to produce a selection of bytes of the digital signature; and replacing the encrypted selection of the digital signature with the selection of bytes of the digital signature to produce the digital signature.

The extracting an encrypted selection of the digital signature may include: extracting a predetermined selection of the encrypted digital signature to produce the encrypted selection of the digital signature.

In some embodiments, the extracting an encrypted selection of the digital signature includes: extracting a predetermined selection of the encrypted digital signature; and executing an XOR function of the predetermined selection of the encrypted digital signature and an auxiliary predetermined selection of the encrypted digital signature to produce the encrypted selection of the digital signature. The predetermined selection of the encrypted digital signature and auxiliary predetermined selection of the encrypted digital signature have the same number of bytes, and the predetermined selection of the encrypted digital signature and auxiliary predetermined selection of the encrypted digital signature do not overlap.

Preferably, encryption associated with the secret symmetric encryption key is secure against cryptographic attack (e.g., brute-force key search attack)by a quantum computer.

Typically, the public key of the asymmetric cryptographic key pair associated with the first computing device being available at the first computing device and the second computing device, based on a secure data transfer using the secret symmetric encryption key, includes the steps of: receiving the encrypted public key, by the second computing device, from the first computing device, over the computational network; and decrypting, by the second computing device, using the secret symmetric encryption key, the encrypted public key, to produce the public key of the asymmetric cryptographic key pair associated with the first computing device.

A third aspect of the invention herein provides a first computing device, wherein the first computing device comprises one or more processors and a memory, wherein the memory is coupled to the one or more processors, the memory is configured to store computer program code, the computer program code comprises computer instructions, and the one or more processors invoke the computer instructions, to enable the first computing device to perform methods according to the first aspect of the invention.

A fourth aspect of the invention herein provides a second computing device, wherein the second computing device comprises one or more processors and a memory, wherein the memory is coupled to the one or more processors, the memory is configured to store computer program code, the computer program code comprises computer instructions, and the one or more processors invoke the computer instructions, to enable the second computing device to perform methods according to the second aspect of the invention.

A fifth aspect of the invention herein provides a computer program product comprising instructions which, when the program is executed by a computer, cause the computer to carry out the steps of methods according to the first and second aspects of the invention.

A sixth aspect of the invention herein provides a computer-readable storage medium comprising instructions which, when executed by a computer, cause the computer to carry out the steps of methods according to the first and second aspects of the invention.

A seventh aspect of the invention herein provides a non-transitory computer-readable medium for securing digital signatures on a computational network, comprising instructions stored thereon, that when executed on a processor, perform the steps of methods according to the first and second aspects of the invention.

An eighth aspect of the invention herein provides a transaction network comprising a first computing device and a second computing device; wherein the first computing device is configured to: generate a digital signature using a private key of an asymmetric cryptographic key pair associated with the first computing device; encrypting the digital signature using a secret symmetric encryption key to produce an encrypted digital signature; and send the encrypted digital signature to the second computing device on a computational network; wherein the second computing device is configured to: receive the encrypted digital signature from the first computing device over the computational network; decrypt the encrypted digital signature using a secret symmetric encryption key to produce a digital signature; and verify that the digital signature was generated at the first computing device, by using a public key of an asymmetric cryptographic key pair associated with the first computing device; wherein the public key of the asymmetric cryptographic key pair associated with the first computing device is available at the first computing device and the second computing device, encrypted using the secret symmetric encryption key; and wherein the secret symmetric encryption key is available at the first computing device and the second computing device, based on a secure data transfer.

### BRIEF DESCRIPTION OF DRAWINGS

Embodiments of the present invention are described below, by way of example only, with reference to the accompanying drawings, in which:
Figure 1 shows a systematic diagram of a transaction network;
Figure 2 is a first flow chart setting out a method in accordance with an embodiment of the invention;
Figure 3A is a second flow chart setting out a method in accordance with an embodiment of the invention;
Figure 3B is a third flow chart setting out a method in accordance with an embodiment of the invention;
Figure 3C is a fourth flow chart setting out a method in accordance with an embodiment of the invention;
Figure 4 is a fifth flow chart setting out a method in accordance with an embodiment of the invention;
Figure 5 shows in schematic form a data processing device that is capable of implementing the invention and in accordance with an embodiment of the invention.

### DETAILED DESCRIPTION

As used herein, the following terms have the following meanings:
Asymmetric cryptography: Asymmetric cryptography is a form of cryptography in which a pair of keys are used: a private key may be known only to one (or possibly more) parties involved in an encrypted data transfer, and a public key may be (and is generally intended to be) known to the public, to a network, and/or distributed freely. Asymmetric cryptography may be based on one-way mathematical problems and functions which are straightforward to solve in one direction, but intractable to solve (e.g., in terms of difficulty and/or level of computation) in the reverse direction. On this point, data encrypted by a private key may only be decrypted easily by a public key and data encrypted with the private key may only be decrypted easily with the public key. The security of asymmetric cryptography may be derived from the difficulty or intractability of solving these mathematical problems. However, quantum computers may prove a threat to asymmetric cryptography by rendering these mathematical problems easier and faster to solve. Asymmetric cryptography schemes/algorithms may include, for example, RSA (Rivest-Shamir-Adleman), ECC (Elliptic-curve cryptography), and DSA (Digital Signature Algorithm).

Symmetric cryptography: Symmetric cryptography is a form of cryptography in which one key is used for both encryption and decryption. The key is ordinarily known to all parties involved in the data transfer but is not known publicly; the key is a private key. Unlike asymmetric cryptography, the security of symmetric cryptography may not be derived from the difficulty or intractability of solving certain mathematical problems, but rather on the infeasibility of correctly reversing a number of different operations such as substitutions and permutations. In this respect, symmetric cryptography may be substantially more resistant to attack from quantum computers. Symmetric cryptography schemes/algorithms may include, for example, AES (Advanced Encryption Standard), DES (Data Encryption Standard), and Blowfish.

Hybrid cryptography: Hybrid cryptography generally involves using asymmetric cryptography algorithms to share keys of symmetric cryptography algorithms, and thereafter using symmetric cryptography. Hybrid cryptography is usually the most common method of encryption. It may benefit from asymmetric cryptography's ability to avoid problems of secure key distribution, as well as benefiting from the greater speed of symmetric encryption. However, the asymmetric cryptography provides a weak link in hybrid cryptography with respect to the threat from quantum computers.

Digital signature: A digital signature is a message sent from a computing device that is encrypted with a private key of an asymmetric cryptographic key pair associated with that computing device. The digital signature can be used, by decryption with the (generally publicly available) public key of the asymmetric cryptographic key pair, to authenticate and/or confirm the identity of the sender of the message and/or to verify that the message has not been altered in transit. Some encryption schemes are designed specifically for use with digital signatures, for example, DSA encryption.

Closed network: A closed network may be a computer network that may be substantially isolated from public access through the internet, and may be characterized by controlled and limited access, high levels of security, and controlled data flows. Examples of closed networks may include high-security government networks, industry control systems, and networks handling particularly sensitive transactions for financial institutions such as banks.

Partially closed network: A partially or semi closed network (often known as an intranet) may be similar to a closed network, however, they may be characterized by some external access and data flows that may not be permitted in closed networks, while maintaining higher levels of security and control than open networks, for example through strong firewalls, VPNs, etc. Examples of closed networks may include corporate intranets, networks handling secure information such as healthcare patient data, and networks handling sensitive transactions for financial institutions such as banks.

Embodiments herein may provide improved computer-implemented methods for securing digital signatures on a computational network. These embodiments may have various advantageous effects. For example, embodiments herein may provide substantially improved security against attack from quantum computers and other computing devices, can be retrofitted to existing systems already based on use of asymmetric encryption, and may be less resource-intensive than comparable quantum resistant algorithms.

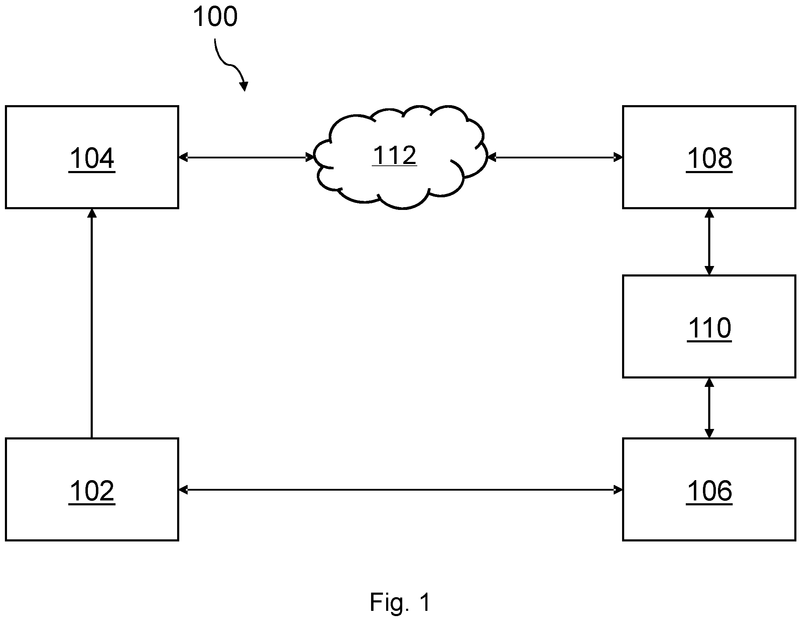

Fig. 1 shows a systematic diagram of a transaction network 100 comprising a computing device 102 associated with a cardholder; an issuer 104; a point of sale (POS) device 106; an acquirer 108; a payment gateway 110; and a payment network 112. The network 100 is arranged to facilitate transactions between the consumer 104 and a merchant associated with the POS device 104. The network 100 is a closed network because only authorised entities, such as the issuer 104 and the acquirer 108 can access the payment network 110.

The computing device 102 is arranged to convey transaction data (e.g., credit card details) for use in a payment transaction with the POS device 106. For example, the cardholder may initiate a transaction by swiping their payment card through a card reader associated with the POS device 106. The POS device 106 subsequently sends the transaction data to the acquirer 108 via the payment gateway 110. The payment gateway 110 is configured to encrypt the transaction data using a public key associated with the acquirer 108 (e.g., via RSA encryption) or the payment network 112, and forward the encrypted transaction data to the acquirer 108. The payment gateway 110 digitally signs the transaction data using a private key associated with the payment gateway 110. The acquirer 108 forwards the encrypted transaction data to the issuer 104 via the payment network 112. The issuer 104 decrypts the encrypted transaction data using a private key corresponding to the public key used to encrypt the transaction data and verifies the cardholder details. This private key is typically stored in a secure Hardware Security Module (HSM) or secure cryptographic device (SCD). The issuer 104 uses a public key associated with the payment gateway private key to decrypt and verify the signature to ensure that the transaction data has not been tampered with.

A problem with the transaction network 100 is that a large scale fault tolerant quantum computer may be able to recover the private key from the public key and/or a digital signature.

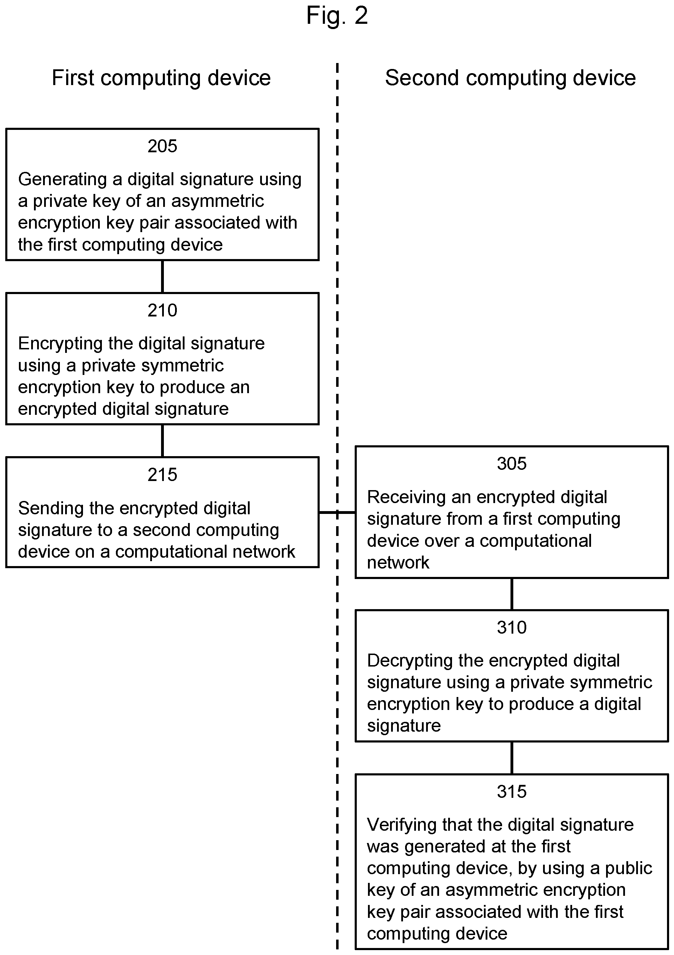

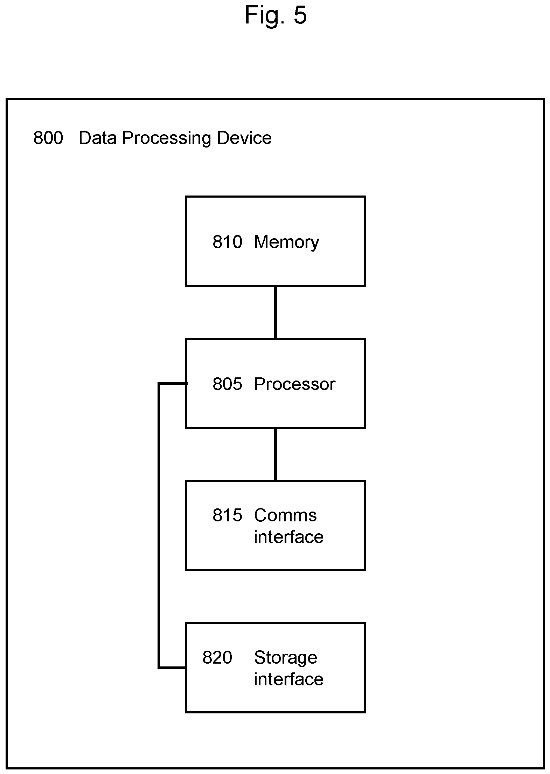

Fig. 2 shows a first flow chart setting out a method in accordance with an embodiment of the invention for addressing this problem. A first part of the method of Fig. 2 (e.g., as indicated with preceding number 2) may be executed by and/or take place at a first computing device, such as a first computing device associated with the payment gateway 110. A second part of the method of Fig. 2 (e.g., as indicated with preceding number 3) may be executed by and/or take place at a second computing device, such as a second computing device associated with the issuer 104. Each of the first and second computing devices may be described with respect to Fig. 5. The second part of the method may be an interrelated method to first part of the method; method steps of one may correspond to or be related to method steps of the other.

A public key of an asymmetric cryptographic key pair associated with the first computing device may be available at the first computing device and a second computing device. It may be available at both computing devices based on a secure data transfer using a secret symmetric encryption key.

The secret symmetric encryption key may be available at, or be distributed between, the first computing device and the second computing device. It may be available at both computing devices based on a secure data transfer comprising at least one of a secure data transfer means and a secure channel. Secure data transfer means may include manual means, such as manually transporting a (possibly encrypted) storage device with the secret symmetric encryption key stored thereon. For example, the secret symmetric encryption key could be provided to the first computing device associated with the payment gateway 110 and the second computing device associated with the issuer 104 using hardware security modules (HSMs) or secure cryptographic devices (SCDs).

Encryption associated with the secret symmetric encryption key may be secure against cryptographic attack (e.g., brute-force key search attack) by a quantum computer. This is because, as discussed above, symmetric cryptography is based on different principles to asymmetric cryptography, wherein, unlike asymmetric cryptography, the security of symmetric cryptography may not be derived from the difficulty or intractability of solving certain mathematical problems solvable by a quantum computer, but rather on the infeasibility of correctly reversing a number of different operations such as substitutions and permutations.

In step 205, the first computing device generates a digital signature using a private key of the asymmetric cryptographic key pair associated with the first computing device. The digital signature may be generated based on a message or other data item. For example, the first computing device associated with the payment gateway 110 generates the digital signature using the private key.

In step 210, the first computing device encrypts the digital signature using the secret symmetric encryption key to produce an encrypted digital signature. For example, the first computing device associated with the payment gateway 110 encrypts the digital signature using the secret symmetric encryption key.

In step 215, the first computing device sends the encrypted digital signature to a second computing device on a computational network. For example, the first computing device associated with the payment gateway 110 sends the encrypted digital signature to the second computing device associated with the issuer 104.

The network is a closed network or a partially closed network, such as the transaction network 100 of Fig. 1. A closed or partially closed network may be particularly relevant to the present invention due to the relative ease of distribution of the secret symmetric encryption key among computing devices of a closed network or partially closed network.

In step 305, the second computing device receives an encrypted digital signature from a or the first computing device over a computational network. For example, the second computing device associated with the issuer 104 receives the encrypted digital signature from the first computing device associated with the payment gateway 110 over the payment network 112.

In step 310, the second computing device decrypts the encrypted digital signature using a secret symmetric encryption key to produce a digital signature. For example, the second computing device associated with the issuer 104 decrypts the encrypted digital signature.

In step 315, the second computing device verifies that the digital signature was generated at the first computing device, by using a public key of an asymmetric cryptographic key pair associated with the first computing device. For example, the second computing device associated with the issuer 104 verifies the digital signature.

Use of the public key on the digital signature may generate a message or other data item. Verification may include assessing that the resultant message or other data item makes sense, conforms to a message standard, and/or is similar to that which may be expected.

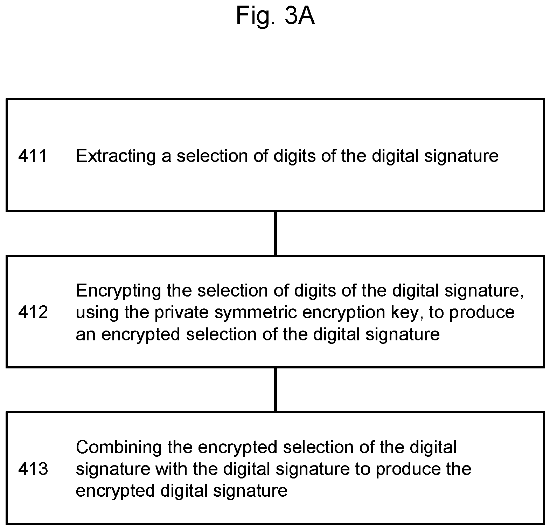

Fig. 3A shows a second flow chart setting out a method in accordance with an embodiment of the invention. The method of Fig. 3A may be executed by and/or take place at a or the first computing device. The method of Fig. 3A may describe in more detail one embodiment of step 210 of the method of Fig. 2. In other words, the method Fig. 3A describes an embodiment for encrypting the digital signature using a secret symmetric encryption key to produce an encrypted digital signature.

In step 411, the first computing device extracts a selection of bytes of the digital signature.

In step 412, the first computing device encrypts the selection of bytes of the digital signature, using the secret symmetric encryption key, to produce an encrypted selection of the digital signature.

In step 413, the first computing device combines the encrypted selection of the digital signature with the digital signature to produce the encrypted digital signature.

In a first exemplary embodiment, the combining the encrypted selection of the digital signature with the digital signature to produce the encrypted digital signature (i.e., step 413) includes: replacing the selection of bytes of the digital signature with the encrypted selection of the digital signature. In this embodiment, the selection of bytes may be the most significant bytes (i.e., the numerically largest). The first example below may show such an embodiment.

In a second exemplary embodiment, the combining the encrypted selection of the digital signature with the digital signature to produce the encrypted digital signature (i.e., step 413) includes: replacing an auxiliary selection of bytes of the digital signature with the result of: an XOR (exclusive OR) function (or other bitwise operation) of the encrypted selection of the digital signature and the auxiliary selection of bytes of the digital signature. In this embodiment the auxiliary selection of bytes (not the selection of bytes) may be the most significant bytes (i.e., the numerically largest). The selection of bytes may be of the same size (in terms of number of bytes) as the auxiliary selection of bytes and the selection of bytes may not overlap with the auxiliary selection of bytes. The second example below may show such an embodiment.

The first exemplary embodiment above may offer straightforward and quick execution of the method while maintaining substantial security. The second exemplary embodiment may maximize security of the method, and offer the greatest resistance to brute-force key search attack from quantum computers.

In each embodiment, it may be predetermined how to select the selection of bytes and the auxiliary selection of bytes. By way of example, in the first exemplary embodiment, the selection of bytes may be predetermined to always be a number *n* (e.g., 8, 16, etc.) of the most significant (highest order) bytes. By way of a further example, in the second exemplary embodiment, the selection of bytes may be predetermined to always be a number *n* (e.g., 8, 16, etc.) of the middlemost bytes, and the auxiliary selection of bytes may be predetermined to always be the same number *n* of the most significant (highest order) bytes.

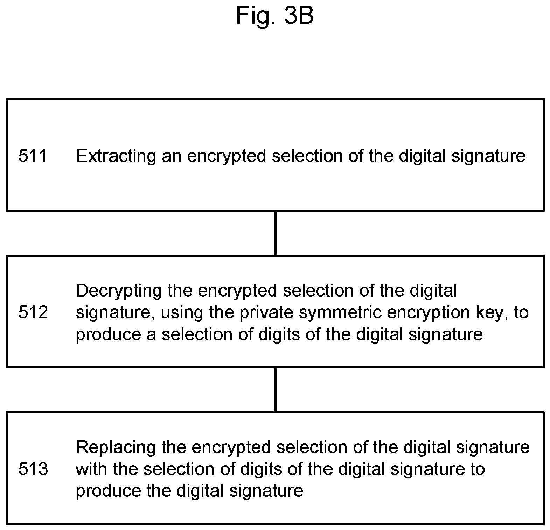

Fig. 3B shows a third flow chart setting out a method in accordance with an embodiment of the invention. The method of Fig. 3B may be executed by and/or take place at a or second first computing device. The method of Fig. 3B may describe in more detail one embodiment of step 310 of the method of Fig. 2. In other words, the method Fig. 3B describes an embodiment for decrypting the encrypted digital signature using a secret symmetric encryption key to produce a digital signature.

In step 511, the second computing device extracts an encrypted selection of the digital signature.

In step 512, the second computing device decrypts the encrypted selection of the digital signature, using the secret symmetric encryption key, to produce a selection of bytes of the digital signature.

In step 513, the second computing device replaces the encrypted selection of the digital signature with the selection of bytes of the digital signature to produce the digital signature.

In a first exemplary embodiment (e.g., the same first exemplary embodiment as discussed above), the extracting an encrypted selection of the digital signature (i.e., step 511) includes: extracting a predetermined selection of the encrypted digital signature to produce the encrypted selection of the digital signature.

The first example below may show such an embodiment.

In a second exemplary embodiment (e.g., the same second exemplary embodiment as discussed above), the extracting an encrypted selection of the digital signature (i.e., step 511) includes: extracting a predetermined selection of the encrypted digital signature; and executing an XOR (exclusive OR) function (or other bitwise operation) of the predetermined selection of the encrypted digital signature and an auxiliary predetermined selection of the encrypted digital signature to produce the encrypted selection of the digital signature. In this embodiment the predetermined selection (not the auxiliary predetermined selection) may be the most significant bytes (i.e., the numerically largest). The predetermined selection may be of the same size (in terms of number of bytes) as the auxiliary predetermined selection and the predetermined selection may not overlap with the auxiliary predetermined selection.

The second example below may refer to such an embodiment (though this specific operation is not explicitly shown).

The first exemplary embodiment above may offer straightforward and quick execution of the method while maintaining substantial security. The second exemplary embodiment may maximize security of the method, and offer the greatest resistance to brute-force key search attack from quantum computers.

In each embodiment, it may be predetermined how to select the predetermined selection of the encrypted digital signature and the auxiliary predetermined selection of the encrypted digital signature. By way of example, in the first exemplary embodiment, the predetermined selection of the encrypted digital signature may be predetermined to always be a number *n* (e.g., 8, 16, etc.) of the most significant (highest order) bytes. By way of a further example, in the second exemplary embodiment, the predetermined selection of the encrypted digital signature may be predetermined to always be a number *n* (e.g., 8, 16, etc.) of the most significant (highest order) bytes, and the auxiliary predetermined selection of the encrypted digital signature may be predetermined to always be the same number *n* of the middlemost bytes. Note that, for brevity and simplicity of language and description, the auxiliary and standard selections in the method of Fig. 3B are reversed with respect to their position when compared to the auxiliary and standard selections in the method of Fig. 3A.

The comments made in the discussion of the first and second exemplary embodiments with respect to Fig. 3A may be equally applicable to the first and second exemplary embodiments with respect to Fig. 3B.

The number *n* as referred to above and the selections of, for example, most significant and middlemost bytes, may correspond between the methods of Figs 2A and 2B.

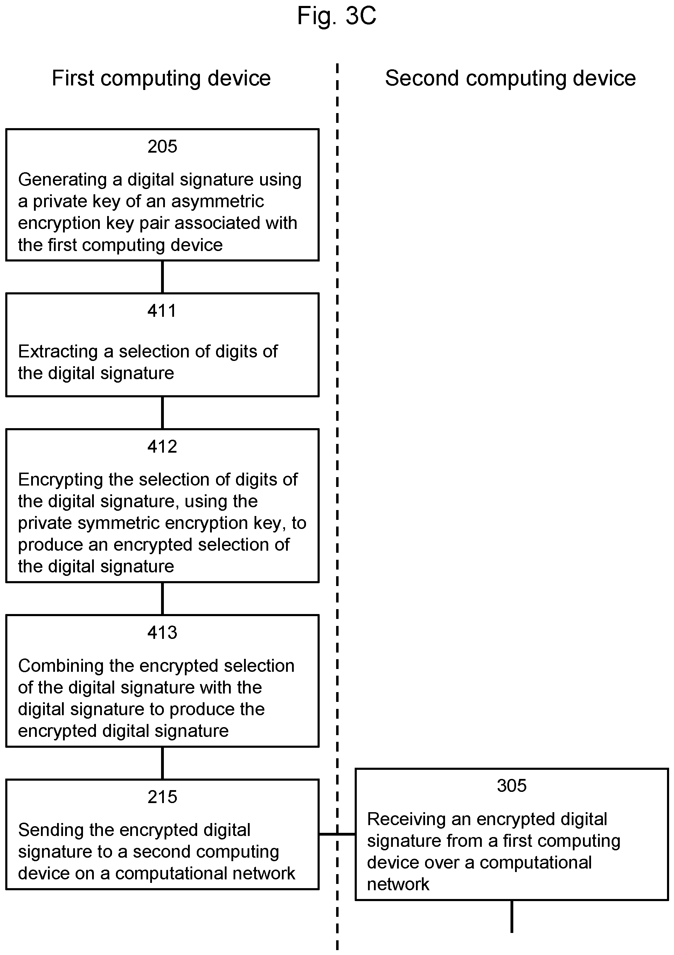

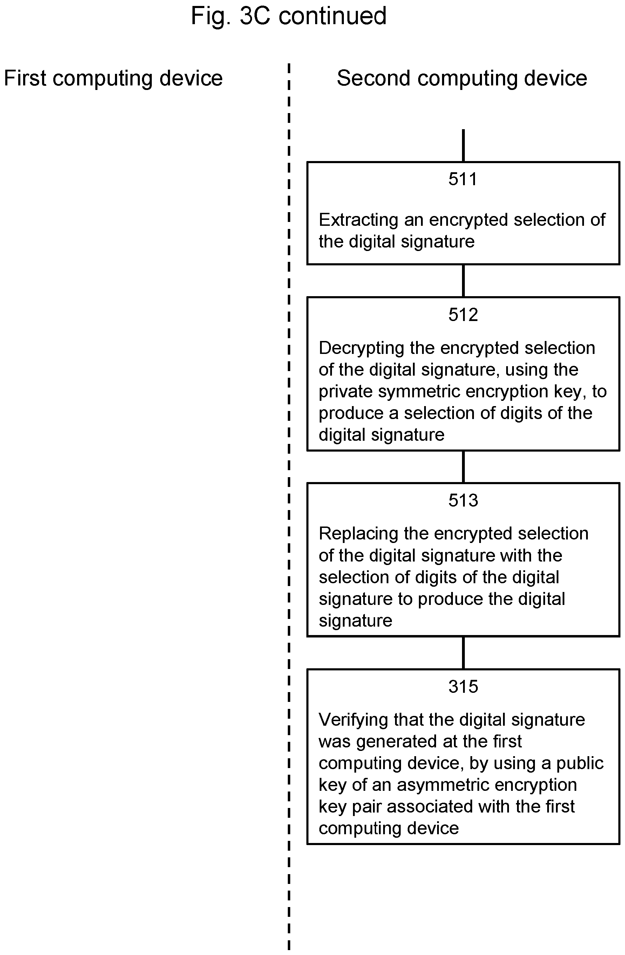

Fig. 3C shows a fourth flow chart setting out a method in accordance with an embodiment of the invention. Fig. 3C shows an exemplary embodiment of the methods of Figs. 2A and 2B in operation in the first and second computing devices, and a possible interaction between these methods. The methods of Figs. 2A and 2B are shown in the context of the method of Fig. 2.

Below are a number of examples related to the operations of Figs. 3A, 3B, and/or 3C. The first example and second example below may correspond to the first exemplary embodiment and second exemplary embodiment above, respectively.

First Example: The first example shows modulus obfuscation through encryption of 16 bytes of signature (bytes may be the most significant bytes of a signature). The first example uses RSA encryption as the asymmetric encryption methodology and AES encryption as the symmetric encryption methodology. Number values are expressed in hexadecimal. The example is outlined below:
- Chosen example values for the asymmetric RSA encryption:
   ∘ P = F5223DBAD2F17F48FF17
   ∘ Q = E85B650E898E0AA11A2D
   ∘ RSA Modulus = DE7E8BE1AE8542D8091336E79D6050021D342D0B
   ∘ Public exponent = 3
   ∘ Private exponent = 94545D411F0381E55B60E646A70F4D01B786B7DB
   ∘ The person skilled in the art will understand the meanings of each of the values above with respect to RSA encryption. The specific values chosen are by no means limiting.
- Therefore, the asymmetric public key may be expressed as: (DE7E8BE1AE8542D8091336E79D6050021D342D0B, 3)
- And the asymmetric private key may be expressed as:
   (DE7E8BE1AE8542D8091336E79D6050021D342D0B, 94545D411F0381E55B60E646A70F4D01B786B7DB)
- Chosen example AES key (secret symmetric key) = C2BB0DD7A9DD4543B113A7C7C9F826AF
- As discussed, the symmetric key may be known to closed/semi-closed system and stored/possibly distributed using secure cryptographic devices.
- Chosen example data or message to be signed: 4A3F984CB912ED79C13DE4DE8379D3A4
- RSA Private exponent operation creates the digital signature: 123748C2114FED890EECD6A70FA46EB5EFFE0549
- The 16 most significant bytes of the digital signature may be symmetrically encrypted using the AES key:
   123748C2114FED890EECD6A70FA46EB5 → 43563C4CE17DD51F057760A2ADB8E79E
- The transmitted or encrypted 'signature', in which 16 most significant bytes are replaced, may therefore be: 43563C4CE17DD51F057760A2ADB8E79EEFFE0549
- On receipt (e.g., by the second computing device) the 16 most significant bytes may be decrypted using the symmetric encryption key, revealing: 123748C2114FED890EECD6A70FA46EB5
- The most significant 16 bytes of the received 'signature' are replaced to reconstruct the original RSA digital signature:
   123748C2114FED890EECD6A70FA46EB5EFFE0549
- Public key operation with public exponent 3 and modulus DE7E8BE1AE8542D8091336E79D6050021D342D0B creates the following output data: 4A3F984CB912ED79C13DE4DE8379D3A4
- This data in a form that is expected, and therefore verifies the signature.

Second Example: Modulus obfuscation through encryption of a first selection of 16 bytes of signature and executing an XOR function into a second selection of 16 bytes of a signature to replace the second selection of 16 bytes of a signature:
- Chosen example values for the asymmetric RSA encryption:
   ∘ P = F61BDB0142297FDF889ED8C5E4D69798C54A562A628B126CA 08CE0FC94F56687A92843119162DF6CD0A489AE6E109938954 0F273A8FE0CD4BBEF7DDD1049B9A5
   ∘ Q = FB9772B3879E1647A00D416336CB623AA22773084DDAEB95B A4DECEB9C32E8D1F21D497AFAE4B0ED47C053A50BDB452D 7929239848A4118295C28E5C56608407
   ∘ RSA Modulus = F1DEE86D68FE134C6AD8009B3BAC8C9BBFD91B8A68F7893E 705E9D8F56BB4AD68A3F3D33FFE6BB4F00095ECC91B258D6 DF1FA24C4B8F95742C294854F3F8936680FBC0B3ED065AC42 231677BAE122EFAA2CF3708DBA77C26F9F234EA990AA4EAA 9A191A17CFCD09C5E13627C194F47FA26B3F512D2D44F008E 538AC0819D2783
   ∘ Public exponent = 3
   ∘ Private exponent = 284FD167917FADE211CEAAC489F2176F4AA42F41BC29418A6 80FC4ED391F3723C1B534DDFFFBC9E280018FCCC2F30ECE7 A8545B761ED43935CB18C0E28A96DE617E1687FDB3520C4D4 40E2386DBD5E31348F924E5C8AEA5B6FD93BD5BBFB0E42D7 BA00D8D2C8E00B0B9D16316FE5E6EE040C4FD67ADDB2C6D F703FC12F287C4F
   ∘ The person skilled in the art will understand the meanings of each of the values above with respect to RSA encryption. The specific values chosen are by no means limiting.
- Therefore, the asymmetric public key may be expressed as: (F1DEE86D68FE134C6AD8009B3BAC8C9BBFD91B8A68F7893E705E 9D8F56BB4AD68A3F3D33FFE6BB4F00095ECC91B258D6DF1FA24C4 B8F95742C294854F3F8936680FBC0B3ED065AC42231677BAE122EFA A2CF3708DBA77C26F9F234EA990AA4EAA9A191A17CFCD09C5E136 27C194F47FA26B3F512D2D44F008E538AC0819D2783, 3)
- Therefore, the asymmetric private key may be expressed as: (F1DEE86D68FE134C6AD8009B3BAC8C9BBFD91B8A68F7893E705E 9D8F56BB4AD68A3F3D33FFE6BB4F00095ECC91B258D6DF1FA24C4 B8F95742C294854F3F8936680FBC0B3ED065AC42231677BAE122EFA A2CF3708DBA77C26F9F234EA990AA4EAA9A191A17CFCD09C5E136 27C194F47FA26B3F512D2D44F008E538AC0819D2783, 284FD167917FADE211CEAAC489F2176F4AA42F41BC29418A680FC4 ED391F3723C1B534DDFFFBC9E280018FCCC2F30ECE7A8545B761E D43935CB18C0E28A96DE617E1687FDB3520C4D440E2386DBD5E313 48F924E5C8AEA5B6FD93BD5BBFB0E42D7BA00D8D2C8E00B0B9D1 6316FE5E6EE040C4FD67ADDB2C6DF703FC12F287C4F)
- Chosen example AES key (secret symmetric key) = C2BB0DD7A9DD4543B113A7C7C9F826AF
- As discussed, the private key may be known to closed/semi-closed system and stored/possibly distributed using secure cryptographic devices.
- Chosen example data or message to be signed: 4A3F984CB912ED79C13DE4DE8379D3A4
- RSA Private exponent operation creates the digital signature: 5DA5783E7E356A285C743EA77814397A45B99AF7D9B6FFC7F9E271 33B11312F34F60097439D3D640845EEC739A13610CA57C8265F3723 D971407712C5498BB74C2391E6642F88916EDFE334538ED22E657F8 39E3D38C8E818D7DF223F5057469F098228FB6CA6906DD550DC789 2AE55A327F1A2E7AB1961A05D545F6121CC7FE
- The middle 16 bytes are: 1407712C5498BB74C2391E6642F88916
- This 16-byte selection of the digital signature may be symmetrically encrypted using the AES key to produce: 77229D1F5CB46B1423864268E292B391
- Executing an XOR function of the produced encrypted selection of the digital signature with the most significant 16 bytes of the signature (16 middle bytes and 16 most significant bytes do not overlap) produces: 2A87E5212281013C7FF27CCF9A868AEB
- The transmitted signature is:
   2A87E5212281013C7FF27CCF9A868AEB45B99AF7D9B6FFC7F9E271 33B11312F34F60097439D3D640845EEC739A13610CA57C8265F3723 D971407712C5498BB74C2391E6642F88916EDFE334538ED22E657F8 39E3D38C8E818D7DF223F5057469F098228FB6CA6906DD550DC789 2AE55A327F1A2E7AB1961A05D545F6121CC7FE

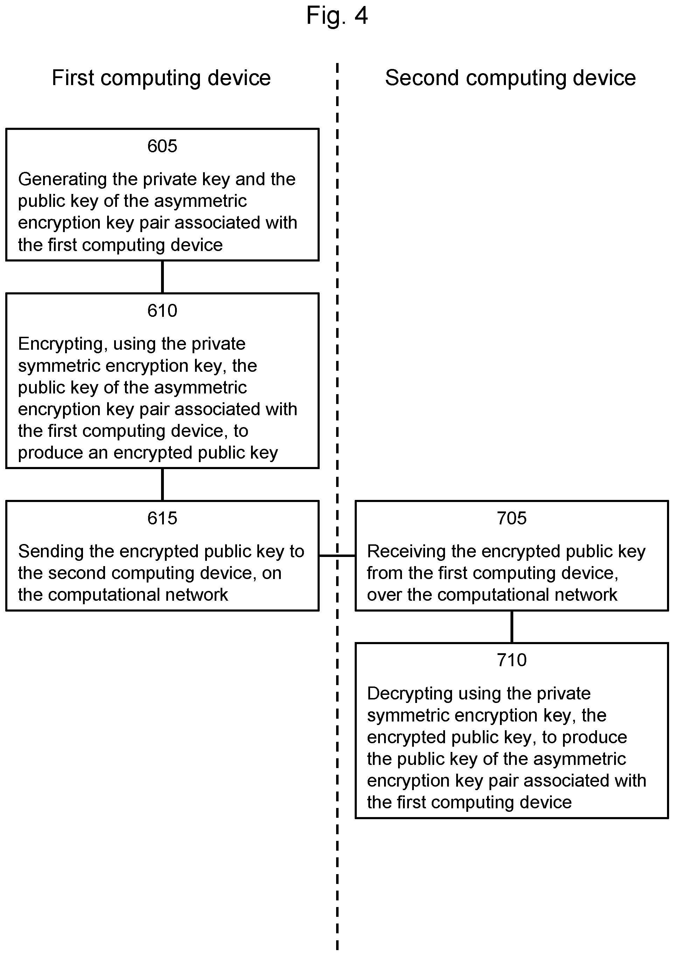

Fig. 4 shows a fifth flow chart setting out a method for achieving the aforementioned availability of the public key of the asymmetric cryptographic key pair associated with the first computing device at the first computing device and the second computing device, based on a secure data transfer using the secret symmetric encryption key. A first part of the method of Fig. 4 (e.g., as indicated with preceding number 6) may be executed by and/or take place at the first computing device. A second part of the method of Fig. 4 (e.g., as indicated with preceding number 7) may be executed by and/or take place at the second computing device.

In step 605, the first computing device generates the private key and the public key of the asymmetric cryptographic key pair associated with the first computing device

In step 610, the first computing devices encrypts, using the secret symmetric encryption key, the public key of the asymmetric cryptographic key pair associated with the first computing device, to produce an encrypted public key.

In step 615, the first computing device sends the encrypted public key to the second computing device, on the computational network.

The secret symmetric encryption key may be available at the first computing device and the second computing device, based on a secure data transfer comprising at least one of a secure data transfer means and a secure channel.

Advantageously, the present invention offers a means of keeping the public key known only to the first computing device and the second computing device and possibly other computing devices that may require the public key. As such the public key (e.g., the modulus and public exponent in RSA cryptography) may be unavailable to a malicious party. This may substantially increase security from attack by a quantum computer, which may be capable of ascertaining the private key based on the public key.

In step 705, the second computing device receives the encrypted public key from the first computing device, over the computational network.

In step 710, the second computing device decrypts, using the secret symmetric encryption key, the encrypted public key, to produce the public key of the asymmetric cryptographic key pair associated with the first computing device.

The secret symmetric encryption key may be available at the first computing device and the second computing device, based on a secure data transfer comprising at least one of a secure data transfer means and a secure channel.

By way of example, Fig. 5 shows in schematic form a data processing device 800 that is suitable for performing the functions of methods herein.

Data processing device 800 includes a processor 805 for executing instructions. Instructions may be stored in a memory 810, for example. Processor 805 may include one or more processing units (e.g., in a multi-core configuration) for executing instructions. The instructions may be executed within a variety of different operating systems on the data processing device 800, such as UNIX, LINUX, Microsoft Windows^{®}, etc. More specifically, the instructions may cause various data manipulations on data stored in memory 820 (e.g., create, read, update, and delete procedures). It should also be appreciated that upon initiation of a computer-implemented method, various instructions may be executed during initialization. Some operations may be required in order to perform one or more methods described herein, while other operations may be more general and/or specific to a particular programming language (e.g., C, C#, C++, Java, or other suitable programming languages, etc.).

Processor 805 is operatively coupled to a communication interface 815 such that data processing device 800 is capable of communicating with a remote device, such as another data processing device of system 200.

Processor 805 may also be operatively coupled to a storage device. The storage device is any computer-operated hardware suitable for storing and/or retrieving data, where in the case of a secure storage medium the data is stored and retrieved securely.

Storage device can be integrated in data processing device 800, or it can be external to data processing device 800 and located remotely. For example, data processing device 800 may include one or more hard disk drives as a storage device. Alternatively, where the storage device is external to data processing device 800, it can comprise multiple storage units such as hard disks or solid state disks in a redundant array of inexpensive disks (RAID) configuration. The storage device may include a storage area network (SAN) and/or a network attached storage (NAS) system.

Processor 805 can be operatively coupled to the storage device via a storage interface 820. Storage interface 830 is any component capable of providing processor 805 with access to the storage device. Storage interface 820 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 805 with access to the storage device.

Memory 810 may include, but is not limited to, random access memory (RAM) such as dynamic RAM (DRAM) or static RAM (SRAM), read-only memory (ROM), erasable programmable read-only memory (EPROM), electrically erasable programmable read-only memory (EEPROM), and non-volatile RAM (NVRAM). The above memory types are exemplary only, and are thus not limiting as to the types of memory usable for storage of a computer program.

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

While the disclosure has been described in terms of various specific embodiments, those skilled in the art will recognize that the disclosure can be practiced with modification within the spirit and scope of the claims.

As used herein, the term "non-transitory computer-readable media" is intended to be representative of any tangible computer-based device implemented in any method or technology for short-term and long-term storage of information, such as, computer-readable instructions, data structures, program modules and submodules, or other data in any device. Therefore, the methods described herein may be encoded as executable instructions embodied in a tangible, non-transitory, computer readable medium, including, without limitation, a storage device, and/or a memory device. Such instructions, when executed by a processor, cause the processor to perform at least a portion of the methods described herein. Moreover, as used herein, the term "non-transitory computer-readable media" includes all tangible, computer-readable media, including, without limitation, non-transitory computer storage devices, including, without limitation, volatile and non-volatile media, and removable and non-removable media such as a firmware, physical and virtual storage, CD-ROMs, DVDs, and any other digital source such as a network or the Internet, as well as yet to be developed digital means, with the sole exception being a transitory, propagating signal.

As will be appreciated based on the foregoing specification, the above-described embodiments of the disclosure may be implemented using computer programming or engineering techniques including computer software, firmware, hardware or any combination or subset thereof, wherein the technical effect is enabling sensitive data such a cryptogram to be distributed among secondary merchant data processing devices in a secure manner. Any such resulting program, having computer-readable code means, may be embodied or provided within one or more computer-readable media, thereby making a computer program product, i.e., an article of manufacture, according to the discussed embodiments of the disclosure. The article of manufacture containing the computer code may be made and/or used by executing the code directly from one medium, by copying the code from one medium to another medium, or by transmitting the code over a network.

## Claims

1. A computer-implemented method for securing digital signatures on a computational network, comprising:
generating, by a first computing device, a digital signature using a private key of an asymmetric cryptographic key pair associated with the first computing device;
encrypting, by the first computing device, the digital signature using a secret symmetric encryption key to produce an encrypted digital signature; and
sending the encrypted digital signature, by the first computing device, to a second computing device, on a computational network;
wherein a public key of the asymmetric cryptographic key pair associated with the first computing device is available at the first computing device and the second computing device, encrypted using the secret symmetric encryption key; and
wherein the secret symmetric encryption key is available at the first computing device and the second computing device, based on a secure data transfer.

2. The computer-implemented method according to claim 1, wherein the encrypting the digital signature using a secret symmetric encryption key to produce an encrypted digital signature comprises:
extracting a selection of bytes of the digital signature;
encrypting the selection of bytes of the digital signature, using the secret symmetric encryption key, to produce an encrypted selection of the digital signature; and
combining the encrypted selection of the digital signature with the digital signature to produce the encrypted digital signature.

3. The computer-implemented method according to claim 2, wherein the combining the encrypted selection of the digital signature with the digital signature to produce the encrypted digital signature comprises:
replacing the selection of bytes of the digital signature with the encrypted selection of the digital signature.

4. The computer-implemented method according to claim 2, wherein the combining the encrypted selection of the digital signature with the digital signature to produce the encrypted digital signature comprises:
replacing an auxiliary selection of bytes of the digital signature with the result of: an XOR function of the encrypted selection of the digital signature and the auxiliary selection of bytes of the digital signature.
wherein the selection of bytes and the auxiliary selection of bytes have the same number of bytes, and wherein the selection of bytes and the auxiliary selection of bytes do not overlap.

5. The computer-implemented method according to any previous claim, wherein the public key of the asymmetric cryptographic key pair associated with the first computing device being available at the first computing device and the second computing device, based on a secure data transfer using the secret symmetric encryption key, comprises the steps of:
generating, by the first computing device, the private key and the public key of the asymmetric cryptographic key pair associated with the first computing device;
encrypting, by the first computing device, using the secret symmetric encryption key, the public key of the asymmetric cryptographic key pair associated with the first computing device, to produce an encrypted public key; and
sending the encrypted public key, by the first computing device, to the second computing device, on the computational network.

6. A computer-implemented method for securing digital signatures on a computational network, comprising:
receiving an encrypted digital signature, at a second computing device, from a first computing device over a computational network;
decrypting, by the second computing device, the encrypted digital signature using a secret symmetric encryption key to produce a digital signature; and
verifying, by the second computing device, that the digital signature was generated at the first computing device, by using a public key of an asymmetric cryptographic key pair associated with the first computing device;
wherein the public key of the asymmetric cryptographic key pair associated with the first computing device is available at the first computing device and the second computing device, encrypted using the secret symmetric encryption key; and
wherein the secret symmetric encryption key is available at the first computing device and the second computing device, based on a secure data transfer.

7. The computer-implemented method according to claim 6, wherein the decrypting the encrypted digital signature using a secret symmetric encryption key to produce a digital signature comprises:
extracting an encrypted selection of the digital signature;
decrypting the encrypted selection of the digital signature, using the secret symmetric encryption key, to produce a selection of bytes of the digital signature; and
replacing the encrypted selection of the digital signature with the selection of bytes of the digital signature to produce the digital signature.

8. The computer-implemented method according to claim 7, wherein the extracting an encrypted selection of the digital signature comprises:
extracting a predetermined selection of the encrypted digital signature to produce the encrypted selection of the digital signature.

9. The computer-implemented method according to claim 7, wherein the extracting an encrypted selection of the digital signature comprises:
extracting a predetermined selection of the encrypted digital signature; and
executing an XOR function of the predetermined selection of the encrypted digital signature and an auxiliary predetermined selection of the encrypted digital signature to produce the encrypted selection of the digital signature.
wherein the predetermined selection of the encrypted digital signature and auxiliary predetermined selection of the encrypted digital signature have the same number of bytes, and wherein the predetermined selection of the encrypted digital signature and auxiliary predetermined selection of the encrypted digital signature do not overlap.

10. The computer-implemented method according to any one of claims 6 to 9, wherein the public key of the asymmetric cryptographic key pair associated with the first computing device being available at the first computing device and the second computing device, based on a secure data transfer using the secret symmetric encryption key, comprises the steps of:
receiving the encrypted public key, by the second computing device, from the first computing device, over the computational network; and
decrypting, by the second computing device, using the secret symmetric encryption key, the encrypted public key, to produce the public key of the asymmetric cryptographic key pair associated with the first computing device.

11. A first computing device, wherein the first computing device comprises one or more processors and a memory, wherein
the memory is coupled to the one or more processors, the memory is configured to store computer program code, the computer program code comprises computer instructions, and the one or more processors invoke the computer instructions, to enable the first computing device to perform the method according to any one of claims 1 to 5.

12. A second computing device, wherein the second computing device comprises one or more processors and a memory, wherein
the memory is coupled to the one or more processors, the memory is configured to store computer program code, the computer program code comprises computer instructions, and the one or more processors invoke the computer instructions, to enable the second computing device to perform the method according to any one of claims 6 to 10.

13. A computer program product comprising instructions which, when the program is executed by a computer, cause the computer to carry out the steps of the method of any of claims 1 to 10.

14. A computer-readable storage medium comprising instructions which, when executed by a computer, cause the computer to carry out the steps of the method of any of claims 1 to 10.

15. A transaction network comprising a first computing device and a second computing device;
wherein the first computing device is configured to:
generate a digital signature using a private key of an asymmetric cryptographic key pair associated with the first computing device;
encrypting the digital signature using a secret symmetric encryption key to produce an encrypted digital signature; and
send the encrypted digital signature to the second computing device on a computational network;
wherein the second computing device is configured to:
receive the encrypted digital signature from the first computing device over the computational network;
decrypt the encrypted digital signature using a secret symmetric encryption key to produce a digital signature; and
verify that the digital signature was generated at the first computing device, by using a public key of an asymmetric cryptographic key pair associated with the first computing device;
wherein the public key of the asymmetric cryptographic key pair associated with the first computing device is available at the first computing device and the second computing device, encrypted using the secret symmetric encryption key; and
wherein the secret symmetric encryption key is available at the first computing device and the second computing device, based on a secure data transfer.
